# EUROPÄISCHE PATENTANMELDUNG

(11) **EP 1 634 730 A1**
(43) Veröffentlichungstag der Anmeldung: **15.03.2006**
(21) Anmeldenummer: 05019840.7
(22) Anmeldetag: 13.09.2005
(51) Int. Cl.: B60D 1/54, B60D 1/06

(54) **Anhängerkupplung mit Kugelgelenk**

(30) Priorität: 14.09.2004 DE 102004044912; 14.09.2004 DE 102004044855
(71) Anmelder: MVG Metallverarbeitungsgesellschaft mbH, 52249 Eschweiler (DE)
(72) Erfinder: Esch, Michael, 53879 Euskirchen (DE); Noppen, Christoph, 52078 Aachen (DE); Piekarski, Darius, 52224 Stolberg (DE); Schlappa, Edward, 52249 Eschweiler (DE)
(74) Vertreter: Bauer, Dirk

(57) **Zusammenfassung**

Eine Anhängekupplung (1000) für ein Kraftfahrzeug, mit einer Kupplungskugel (1150) und einer damit verbundenen Kugelstange (1100) und einem an einem Trägerteil des Kraftfahrzeugs festlegbaren Lagerelements, an dem die Kugelstange (1100) an ihrem der Kupplungskugel (1150) abgewandten Ende beweglich so gelagert ist, dass die Anhängekupplung (1000) von einer Betriebsstellung B in einer Ruhestellung R und umgekehrt überführbar ist, besitzt als Lagerelement ein Kugelgelenk. Um eine Raum sparende Lagerung der Kugelstange (1100) ei sicherer Krafteinleitung in das Fahrzeug und bei gleichzeitig vielen Freiheitsgraden bei der Überführung der Kugelstange von der Betriebsstellung B in die Ruhestellung R zu ermöglichen, wird erfindungsgemäß vorgeschlagen, dass das Kugelgelenk in der Betriebsstellung der Anhängekupplung sämtliche zwischen dem Kraftfahrzeug und dem Anhänger auftretenden Kräfte überträgt.

## Beschreibung

Die Erfindung betrifft eine Anhängekupplung für ein Kraftfahrzeug, mit einer Kupplungskugel und einer damit verbundenen Kugelstange und einem an einem Trägerteil des Kraftfahrzeugs festlegbaren Lagerelement, an dem die Kugelstange an ihrem der Kupplungskugel abgewandten Ende beweglich so gelagert ist, dass die Anhängekupplung von einer Betriebsstellung in einer Ruhestellung und umgekehrt überführbar ist, wobei das Lagerelement ein Kugelgelenk ist.

Bei derartigen allgemein bekannten Anhängekupplungen ist die Kugelstange um mindestens eine rotatorische Achse hin und her schwenkbar, oft motorisch angetrieben, teilweise aber auch von Hand bewegbar. Bekanntermaßen stellen sich an eine solche Anhängekupplung unter anderem folgende technisch-konstruktive sowie ästhetische Anforderungen:
- Die Bodenfreiheit des Kraftfahrzeugs soll durch die Anhängekupplung weder in der Betriebs- noch in der Ruhestellung eingeschränkt werden.
- Die Anhängekupplung muss Belastungen durch angehängte Lasten, also im wesentlichen Zug-, Druck- und Gewichtskräfte, inklusive Belastungsspitzen, mit ausreichenden Sicherheitszugaben standhalten.
- Die Anhängekupplung muss nationalen und internationalen Sicherheitsnormen genügen.
- In der Ruhestellung soll die Anhängekupplung möglichst nicht sichtbar sein.
- Die Anhängekupplung soll möglichst kleinbauend, stabil und leicht sein.
- Die Überführung von der Betriebs- in die Ruhestellung soll durch wenige einfache Handbewegungen schnell und sicher erfolgen können und auch von technisch ungeübten Anwendern einfach leistbar sein.

Aus der DE 100 45 296 A1 ist eine Anhängekupplung bekannt, bei der in Betriebsstellung ein vertikal ausgerichteter Endabschnitt der Kugelstange in einer fest mit einem Trägerteil des Kraftfahrzeugs verbundenen Lagerhülse gelagert ist. In dieser Stellung werden die im Anhängerbetrieb auftretenden Betriebskräfte zwischen dem Kraftfahrzeug und dem Anhänger von der Kugelstange in die Lagerhülse eingeleitet und von dort in das Trägerteil, d.h. die Fahrzeugkarosserie, abgeleitet. Um die bekannte Anhängekupplung in eine Ruhestellung zu bringen, ist es erforderlich, die Kugelstange in vertikale Richtung nach unten so weit aus der Lagerhülse herauszubewegen bis ein Gelenk an der Kugelstange, das ansonsten innerhalb der Lagerhülse angeordnet ist, sich außerhalb derselben befindet, so dass der der Kupplungskugel zugewandte vordere Teil der Kugelstange nunmehr drehbeweglich ist, um die Überführung der Kugelstange in die Ruhestellung zu ermöglichen. Nach einer Ausgestaltung der in der DE 100 45 296 A1 offenbarten Anhängekupplung kann das vorgenannte Gelenk, das in den Zeichnungen als einfaches Drehgelenk ausgebildet ist, auch ein Kugelgelenk sein. Als nachteilig ist es in diesem Zusammenhang anzusehen, dass die Axialverschiebung der Kugelstange innerhalb der Lagerhülse einen großen Platzbedarf erfordert, der bei realen Einbausituationen häufig nicht vorhanden ist.

Eine schwenkbare Anhängekupplung ist des Weiteren aus der WO 03/07375 A1 bekannt. Die Vorrichtung ist allerdings nur um eine vertikale Achse motorisch schwenkbar, könnte also in der Ruhestellung nicht ohne weiteres unter der Stoßstange gelagert werden. Die Anhängekupplung bleibt somit in nachteiliger Weise stets sichtbar.

Ebenfalls schwenkbar ist auch die in der DE 101 34 318 A1 offenbarte Anhängekupplung, wobei dort die Kugelstange eine Tauchbewegung ausführen kann und unter dem Kraftfahrzeug lagerbar ist. Jedoch ist die Konstruktion relativ großbauend und wiewohl funktionell dennoch kompliziert hinsichtlich der erforderlichen Handbewegungen.

Aufgabe der Erfindung ist es, eine Anhängekupplung vorzustellen, welche die Nachteile der bekannten schwenkbaren Anhängekupplungen nicht aufweist und die oben beschriebenen technisch-konstruktiven sowie ästhetischen Anforderungen besser erfüllt als bekannte Anhängekupplungen.

Die erfindungsgemäße Aufgabe wird dadurch gelöst, dass das Kugelgelenk in der Betriebsstellung der Anhängekupplung alle zwischen Kraftfahrzeug und Anhänger auftretenden Betriebskräfte überträgt.

Im Gegensatz zu der in der DE 100 45 296 A1 beschriebenen Lösung, bei der über das Kugelgelenk in der Betriebsstellung allenfalls Zugkräfte übertragen werden, erfolgt bei der erfindungsgemäßen Lösung über das Kugelgelenk auch die Übertragung der Druckkräfte, der Querkräfte sowie sämtliche auf die Kugelstange wirkender Momente. Während also bei der DE 100 45 296 A1 das Kugelgelenk in der Betriebsstellung von einem äußeren Kraftübertragungselement, nämlich der Lagerhülse, überbrückt wird, ist erfindungsgemäß vorgesehen, dass das Kugelgelenk selbst diese Kraftübertragungsfunktion sowie Momentenübertragungsfunktion vollständig übernimmt, woraus sich eine besonders Platz sparende Bauweise ergibt. Im übrigen besteht bei der erfindungsgemäßen Lösung nicht die Notwendigkeit, die Kugelstange zunächst translatorisch zu bewegen, um anschließend die Rotation einzuleiten, sondern das Kugelgelenk ist stets "frei", so dass nach dessen Entriegelung unmittelbar die Schwenkbewegung um beliebige Achsen eingeleitet werden kann.

Das Lagerelement als Kugelgelenk vorzusehen, ermöglicht es zunächst, die Kugelstange um alle möglichen rotatorischen Achsen zumindest um einen bestimmten Winkelbereich zu verlagern. Das Kugelgelenk ermöglicht so auf besonders elegante, kleinbauende und dabei einfache Weise ein fast beliebiges Überführen von der Ruhestellung in die Betriebsstellung und umgekehrt. Damit eignet sich die erfindungsgemäße Anhängekupplung aufgrund der großen Freiheit bei dem Überführungsweg von der Betriebs- in die Ruhestellung und umgekehrt sowohl für den Serieneinbau als auch für die nachträgliche Anbringung in bzw. an fast allen bekannten Kraftfahrzeugen. Insbesondere ist es sehr einfach möglich eine Ruhestellung hinter einem Stoßfänger zu erreichen, in der die Anhängekupplung sichtgeschützt angeordnet ist. Ferner erlaubt ein Kugelgelenk die vergleichsweise verschleißarme Einleitung der im Anhängebetrieb auftretenden (dynamischen) Kräfte in einen zugeordneten Träger des Kraftfahrzeugs. Außerdem sind die Werkzeugkosten für die Herstellung der Bauteile des Kugelgelenks besonders niedrig. Durch die sehr kompakte Bauweise wird der Einsatz auch bei Fahrzeugen mit beengten Platzverhältnissen im Montagebereich ermöglicht.

Ein Kugelgelenk ersetzt dabei mindestens zwei einfache Drehgelenke, wie sie bei Anhängekupplungen nach dem Stand der Technik gebräuchlich sind, um viele Freiheitsgrade bei der Überführung der Kugelstange zu ermöglichen. Da das Kugelgelenk in der Betriebsstellung der Anhängekupplung alle im Anhängebetrieb des Kraftfahrzeugs auftretenden Betriebskräfte überträgt, ist es in der Regel nicht erforderlich, das Kugelgelenk relativ zu dem Trägerteil des Fahrzeugs verschiebbar oder anderweitig verlagerbar zu gestalten und/oder eine äußere Überbrückungseinrichtung vorzusehen, um die Betriebskräfte an dem Kugelgelenk vorbei, d.h. mit einer Hülse, in Teile der Kugelstange zu übertragen, die beidseitig ein Stück weiter von dem Kugelgelenk entfernt sind.

Durch eine Weiterbildung der Erfindung, welche vorsieht, dass das Kugelgelenk von zwei Lagerschalen und einer dazwischen angeordneten Gelenkkugel gebildet ist, die fest mit der Kugelstange verbindbar ist, kann das Kugelgelenk besonders stabil ausgeführt werden. Dabei ist besonders die große Auflagefläche vorteilhaft, mit der die Gelenkkugel an den Lagerschalen anliegt, da dadurch Spitzenbelastungen von Kräften, die auf die Kugelstange einwirken, wirksam verteilt, d.h. mit geringer Flächenpressung abgeleitet, werden können.

Vorzugsweise weist das Kugelgelenk zwei Lagerschalen auf, die von zwei Seiten an der Gelenkkugel anliegen, wobei beide Lagerschalen mit dem Trägerteil des Kraftfahrzeugs verbunden sind.

Eine Weiterbildung sieht außerdem vor, dass das Kugelgelenk sowohl in der Betriebsstellung als auch in der Ruhestellung der Anhängekupplung mittels jeweils mindestens eines Verriegelungselements gegen Bewegung verriegelbar ist. Ein Bewegen der Kugelstange kann so in beiden Stellungen auf sichere und einfache Art verhindert werden.

Zudem kann die Erfindung dadurch weitergebildet werden, dass mindestens ein Verriegelungselement eine Verriegelungskugel ist, die zumindest mit einer Bewegungskomponente in radiale Richtung der Gelenkkugel beweglich gelagert und in einer Verriegelungsstellung formschlüssig mit mindestens einer Vertiefung in der Gelenkkugel in Eingriff bringbar ist.

Ein Vorteil dieser Weiterbildung ist die durch den Formschluss definierte Position, welche von der Gelenkkugel und damit von der Kugelstange in der Verriegelungsstellung einnehmbar ist. Die definierte Position ergibt somit einen definierten Zustand, der ein sicheres Erkennen einer ordnungsgemäßen Verriegelung erlaubt. Zudem ist die Stabilität, welche durch den Formschluss erreicht wird, gegenüber der von kraftschlüssigen Verriegelungsmöglichkeiten überlegen.

Eine weitere vorteilhafte Ausgestaltung kann dadurch erreicht werden, dass das Verriegelungselement mittels eines Federelements elastisch in die Verriegelungsstellung vorgespannt ist, da dadurch ein für die Sicherheit, insbesondere der im Straßenverkehr, nachteiliges unabsichtliches Entriegeln wirksam und dauerhaft verhindert wird.

Ein weiterer Vorteil kann dadurch erreicht werden, dass das Verriegelungselement mittels eines Sicherungselements, insbesondere eines Elements mit schiefer Ebene, in der Verriegelungsstellung sicherbar ist, wobei das Verriegelungselement nach Überführung des Sicherungselements von einer Sicherungsstellung in eine Entsicherungsstellung von der Verriegelungsstellung in eine Freigabestellung überführbar ist, da durch eine solche zusätzliche Maßnahme die Betriebssicherheit der erfindungsgemäßen Anhängekupplung weiter wirksam erhöht wird.

Der Vorteil, das Sicherungselement mit einer schiefen Ebene zu versehen, ist der, dass dieses auch nach etwaigem verschleißbedingtem Materialabtrag durch Reibung in seiner Funktion, d.h. eine Sicherungskraft auszuüben, zunächst nicht beeinträchtigt wird.

Ebenso kann die Erfindung dadurch weitergebildet werden, dass die Gelenkkugel eine erste Vertiefung zur Verriegelung in der Betriebsstellung und eine zweite Vertiefung zur Verriegelung in der Ruhestellung aufweist und dass beide Vertiefungen mittels einer Nut in der Gelenkkugel miteinander verbunden sind, in der das Verriegelungselement bei der Überführung der Anhängekupplung von der Ruhestellung in die Betriebsstellung und umgekehrt führbar ist.

Durch die Nutführung und die beiden Vertiefungen in der Betriebs- und Ruhestellung, wird erreicht, dass die Kugelstange auf einen genau definierten Weg zwischen den beiden Stellungen überführt werden kann und dabei gleichzeitig während des Überführvorgangs ein Anschlagen der Kugelstange an die Stoßstange oder die Karosserie des Kraftfahrzeuges zu verhindern. Der Überführvorgang wird durch die Nutführung auch für technische Laien erheblich erleichtert und kann unabhängig vom Geschick des Bedieners stets zuverlässig ausgeführt werden.

Weitere vorteilhafte Ausgestaltungen sind in den übrigen Unteransprüchen beschrieben.

Anhand zweier Ausführungsbeispiele, die in der Zeichnung dargestellt sind, soll die Erfindung im folgenden näher erläutert werden.

Es zeigt:
- Fig. 1: einen Schnitt durch die Lagerung einer ersten Ausführungsform der erfindungsgemäßen Anhängekupplung in einer Betriebsstellung mit einem Verriegelungselement in einer Verriegelungsstellung,
- Fig.2: einen Schnitt gemäß Fig. 1, jedoch mit dem Verriegelungselement in einer Freigabestellung,
- Fig. 3: eine Seitenansicht einer Gelenkkugel mit Kugelstange,
- Fig. 4: eine Seitenansicht gemäß Fig. 3, jedoch nach einer 90-Grad- Linksdrehung,
- Fig. 5: einen Schnitt durch die Gelenkkugel mit Kugelstange entlang der Mittellinie in der Fig. 3,
- Fig. 6: eine perspektivische Ansicht auf die Gelenkkugel mit Kugelstange und
- Fig. 7: eine Aufsicht auf die Gelenkkugel
- Fig. 8: eine perspektivische Ansicht einer Anhängekupplung mit einem an einer Kugelstange gelagerten Betätigungselement in der Betriebsstellung der Anhängekupplung;
- Fig. 8a: eine vergrößerte Darstellung des Betätigungshebels der Anhängekupplung nach Fig. 8;
- Fig. 9: eine Seitenansicht der Anhängekupplung gemäß Fig. 8;
- Fig. 9a: wie Fig. 9, jedoch mit betätigtem Entriegelungshebel;
- Fig. 9b: wie Fig. 9a, jedoch von der anderen Seite der Kugelstange her betrachtet;
- Fig. 10: eine Vorderansicht der Anhängekupplung gemäß Fig. 8;
- Fig. 10a: wie Fig. 10, jedoch mit betätigtem Entriegelungshebel;
- Fig. 11: einen Horizontalschnitt durch das Lagerelement der Anhängekupplung entlang der Linie IV-IV in Fig. 10;
- Fig. 12: einen Vertikalschnitt durch das Lagerelement und einen Teil der Kugelstange entlang der Linie V-V in Fig. 11 und
- Fig. 13: einen Vertikalschnitt durch das Lagerelement und einen Teil der Kugelstange entlang der Linie VI-VI in Fig. 11.

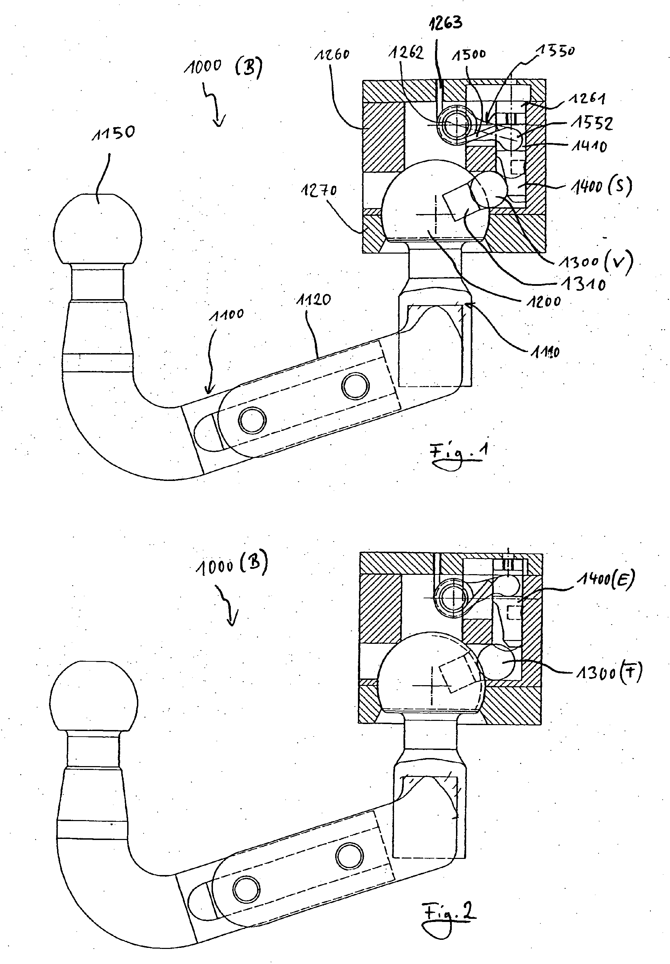

Die in Fig. 1 in einer Betriebsstellung B gezeigte Anhängekupplung 1000 für ein hier nicht gezeigtes Kraftfahrzeug weist eine mit einer Kugelstange 1100 verbundene Kupplungskugel 1150 auf, die an sich bekannte Gegenstücke von daran anhängbaren Anhängern aufnehmen kann. Die Kugelstange 1100 besitzt ein Mittelstück 1120 und ist an dem der Kupplungskugel 1150 gegenüberliegenden Ende durch Verschweißen mit einem Anschlussteil 1110, das auch eine Gelenkkugel 1200 umfasst, verbunden. Dieser Aufbau der Kugelstange 1100 erlaubt eine besonders wirtschaftliche Herstellungsweise, da das Anschlussteil 1110 für alle Anhängekupplungen dieses Typs gleich sein kann und daher z. B. als Schmiedeteil in großen Stückzahlen kostengünstig herstellbar ist. Das aus Mittelteil 1120 und Kupplungskugel 1150 bestehende hintere Teil der Kugelstange 1100 lässt sich einfach der fahrzeugspezifischen Geometrie anpassen und z. B. als Schweißteil auch in kleinerer Stückzahl wirtschaftlich herstellen. Die Gelenkkugel 1200 bildet zusammen mit zwei sie zwischen sich einspannenden Lagerschalen 1260, 1270 ein Lagerelement in Form eines Kugelgelenks. Die Flächen, mit denen die Lagerschalen 1260, 1270 mit der Gelenkkugeloberfläche in Kontakt stehen, sind kugelkalottenförmig ausgebildet und ermöglichen eine gute Verteilung und Weiterleitung der auf sie über die Gelenkkugel 1200 im Anhängebetrieb des Fahrzeugs einwirkenden Kräfte. Die Lagerschalen 1260, 1270 sind auf nicht näher gezeigte Weise formschlüssig miteinander sowie mit einem nicht dargestellten Querträger eines gleichfalls nicht abgebildeten Kraftfahrzeugs verbunden.

Die Gelenkkugel 1200 ist durch eine Verriegelungskugel 1300 in deren Verriegelungsstellung V in der Betriebsstellung B verriegelt. Die Verriegelungskugel 1300 greift dabei in eine Vertiefung 1310 ein und wird von einem Sicherungselement 1400, das eine schiefe Ebene besitzt, in der Verriegelungsstellung S gehalten. In einer Aussparung 1410 des Sicherungselements 1400 befindet sich ein Teil eines Federelements 1500, welches ansonsten auf einem Lagerbolzen 1262 und in einer Aussparung 1263 der oberen Lagerschale 1260 gelagert ist. Das Federelement 1500 spannt ein dieses teilweise umschließendes Druckelement 1550 mit Drucknippel 1552 und damit das Sicherungselement 1400 elastisch in die Sicherungsstellung S vor.

Die Betätigung des Sicherungselements 1400 kann entweder durch den Bediener vor Ort, das heißt an der Anhängekupplung 1000 selbst, erfolgen, oder im Sinne einer Fementriegelung mittels eines im Kofferraum des Kraftfahrzeugs oder am Armaturenbrett angeordneten Betätigungselements.

Die Fig. 2 zeigt das hochgezogene Sicherungselement 1400 in einer Entsicherungsstellung, wodurch die Verriegelungskugel sich - bedingt durch ein schwerkraftinduziertes Schwenken der Kugelstange - in eine Freigabestellung bewegen kann. Die Kugelstange 1100 kann von der Betriebsstellung B in eine Ruhestellung überführt werden.

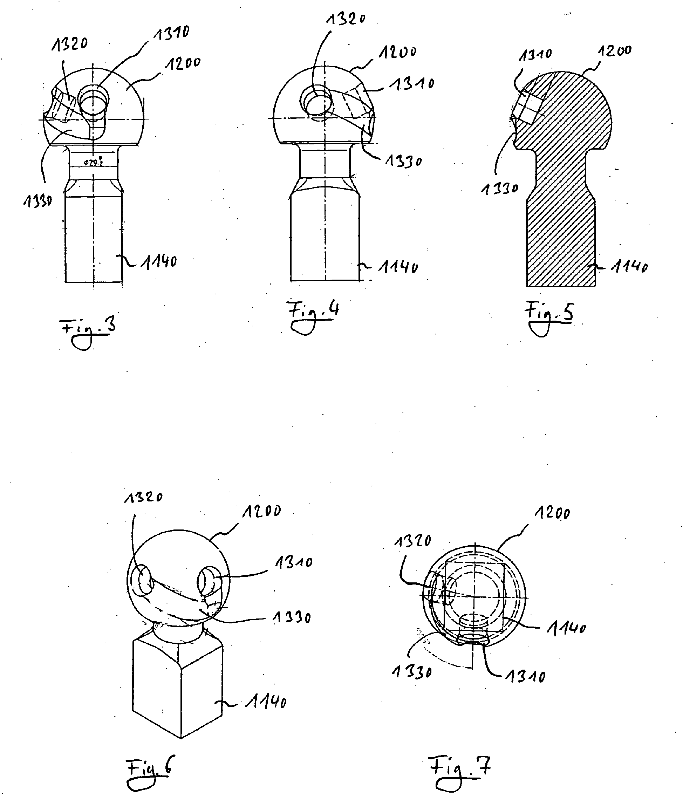

Fig. 3 bis Fig. 7 zeigen die Gelenkkugel 1200 mit Kugelstange 1100 in verschiedenen Ansichten. Gezeigt sind insbesondere die beiden Vertiefungen 1310 und 1320 für die Verriegelungskugel 1300, welche die Betriebs- und die Ruhestellung der Kugelstange 1100 definieren und welche mit einer Nut 1330, die das Verlagern der Kugelstange 1100 und insbesondere das Auffinden der beiden Endstellungen wesentlich vereinfacht, verbunden sind. Dabei ist die erste Vertiefung 1310 mit der Verriegelungskugel 1300 in der Betriebsstellung B in Eingriff, während die zweite Vertiefung 1320 mit der Verriegelungskugel 1300 in der Ruhestellung R in Eingriff.

Ausgehend von der Betriebsstellung B gemäß den Fig. 1 und 2 erlaubt die Kugelgelenk-Lagerung z.B. zunächst die Absenkung der Kugelstange 1100 um eine horizontale und zur Fahrzeug-Längsachse senkrechte Schwenkachse. Anschließend - aber falls gewünscht auch überlagert - findet eine Verschwenkung um eine vertikale Achse durch die Gelenkkugel 1200 statt, damit die Kugelstange eine Stellung erreicht, die ungefähr parallel zu einem Querträger des Kraftfahrzeugs ist. Zum Erreichen der Ruhestellung R kann die Kugelstange 1100 nun noch um eine horizontale und zur Fahrzeug-Längsachse parallele Schwenkachse nach oben geschwenkt werden, damit sie hinter dem Stoßfänger sichtgeschützt angeordnet ist.

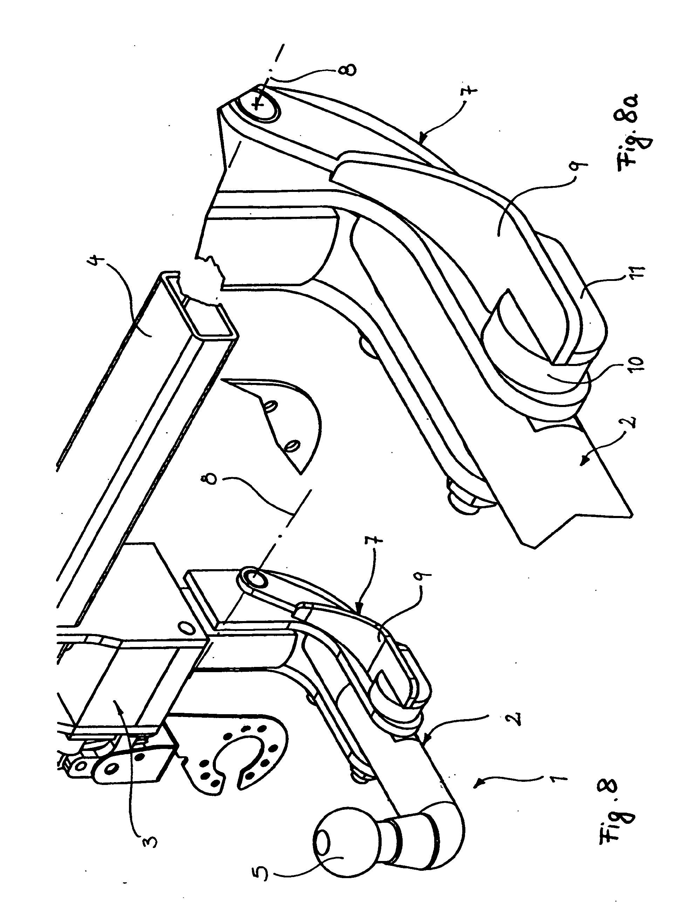

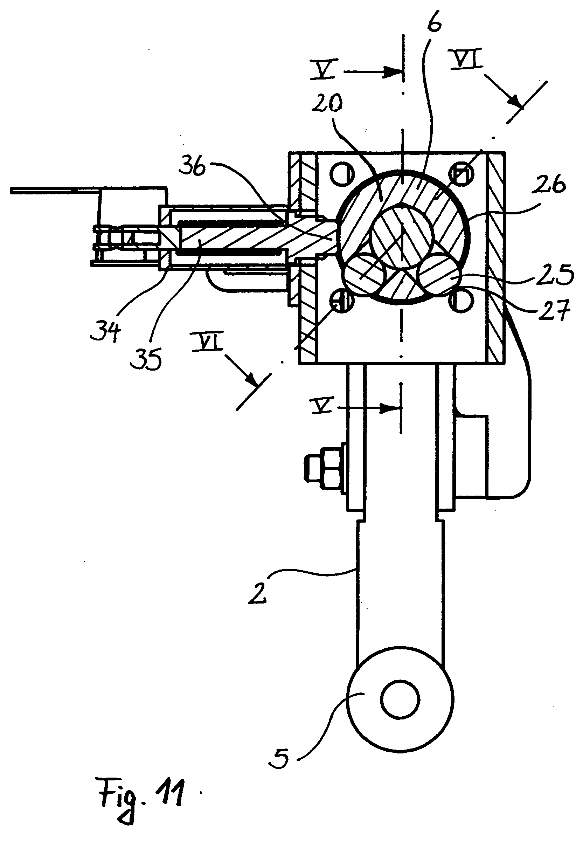

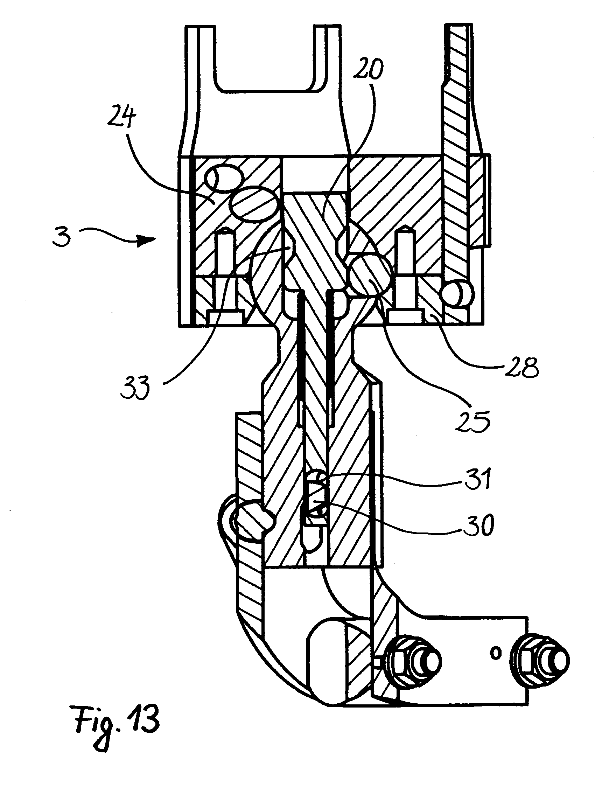

Eine in den Figuren 8, 8a, 9 und 10 gezeigte zweite Ausführungsform der erfindungsgemäßen Anhängekupplung 1 umfasst eine Kugelstange 2, die gelenkig und unlösbar mit einem Lagerelement 3 verbunden ist, das mit einem nur abschnittsweise gezeigten Querträger 4 eines im übrigen nicht mehr dargestellten Kraftfahrzeugs verschweißt ist. Die Kugelstange 2 ist an ihrem dem Fahrzeug abgewandten Ende mit einer Kupplungskugel 5 und ihrem gegenüberliegenden Ende mit einer in dem Lagerelement 3 befindlichen (vgl. Fig. 11 bis 13) Gelenkkugel 6 versehen. Auf den Aufbau und die Funktionsweise der Lagerung der Kugelstange 2 in dem Lagerelement 3 sowie die Verriegelung der Kugelstange 2 wird später noch eingegangen.

Aus den Figuren 8 bis 10 ergibt sich, dass die Kugelstange 2 mit einem Betätigungselement in Form eines gebogenen Hebels 7 versehen ist, der um eine Achse 8 schwenkbar in der Kugelstange 2 gelagert ist. Der Hebel 7 besitzt an seinem der Kupplungskugel 5 zugewandten Ende eine ebenfalls gebogene und in Richtung der Schwenkachse 80 verjüngende Druckplatte 9, die mit dem Ballen der rechten Hand einer bedienenden Person niederdrückbar ist. Dies ist jedoch erst möglich, nachdem ein Sperrelement in Form einer Sperrklinke 10, die drehbar an einem vertikal ausgerichteten Vorderteil 11 des Hebels 7 gelagert ist, gelöst wurde. Solange die Sperrklinke 10 in Eingriff ist, ist der Hebel 7 starr an der Kugelstange 2 festgelegt und lässt sich nicht (ungewollt) betätigen.

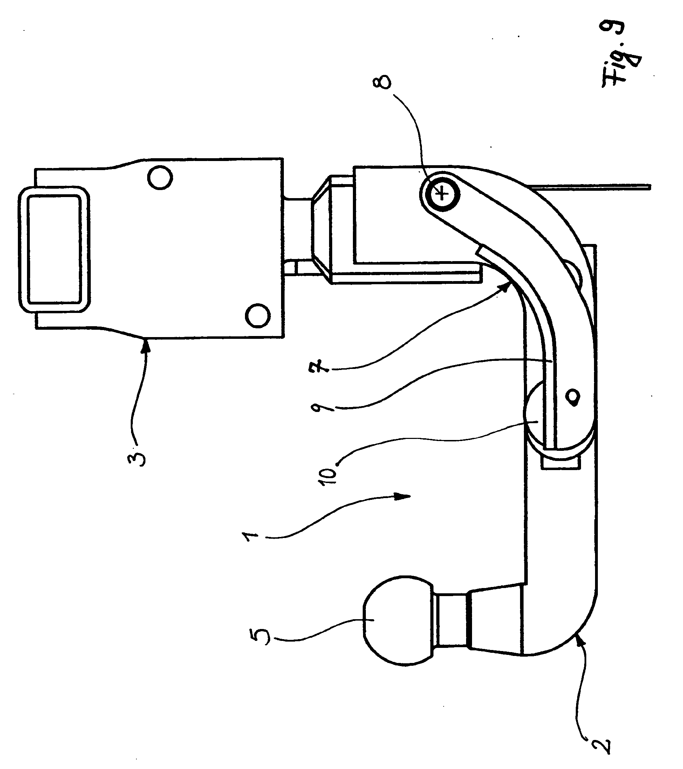

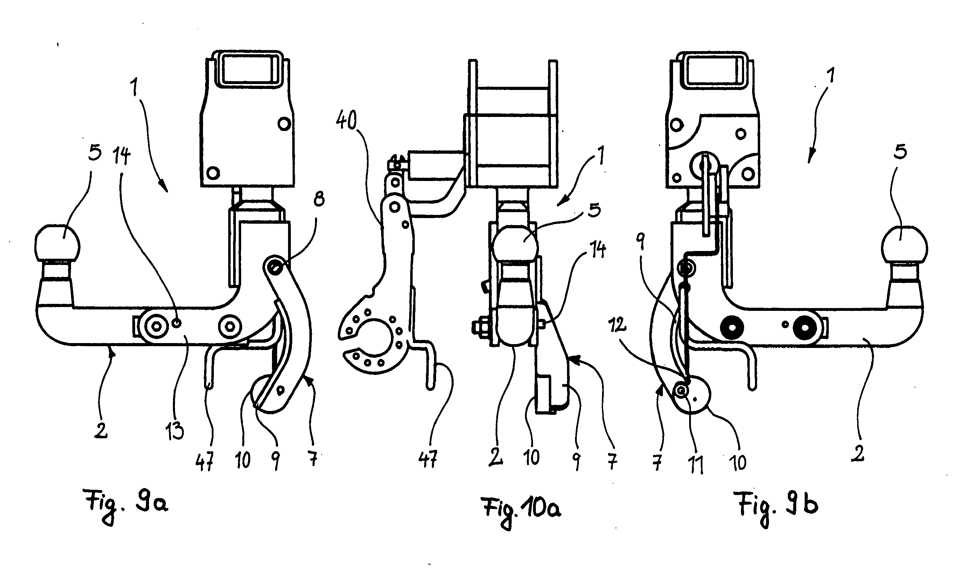

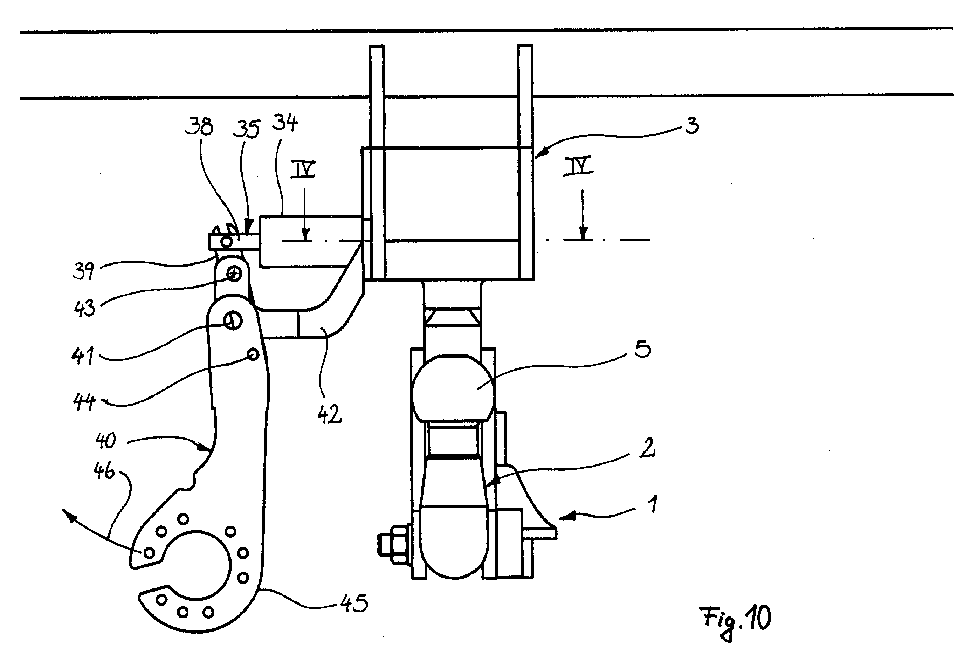

Die Figuren 9a, 9b und 10a zeigen den Hebel 7 jeweils in der Betätigungsstellung, in der sich die Verriegelungseinrichtung, auf die später noch näher eingegangen wird, in der Freigabestellung befindet, so dass die Kugelstange 2 von der gezeigten Betriebsstellung in die Ruhestellung überführt werden kann. Aus den Figuren 9a, 9b und 10a ergibt sich außerdem, dass die Sperrklinke 10 um eine Achse 11, die an dem Hebel 7 befestigt ist, drehbar gelagert ist und mit einer Vertiefung 12 in einem aus einem gekrümmten Verbindungsblech 13 der Kugelstange 2 nach außen vorstehenden Arretierzapfen 14 eingreift, wenn sich der Hebel 7 in der Verriegelungsstellung befindet. Um also den Hebel 7 betätigen zu können, ist es zunächst erforderlich, dass der Bediener mit dem Handballen am Außenumfang der zylinderförmigen Sperrklinke 10 angreift und diese auf sich zu verdreht, damit Vertiefung 12 und Arretierzapfen 14 außer Eingriff geraten. Erst danach lässt sich der Hebel 7 um die Schwenkachse 8 drehen, um die Anhängekupplung zu entriegeln. Wie später noch näher erläutert wird, kann der Hebel 7 von der in den Figuren 9a, 9b und 10a gezeigten Freigabestellung nach Verschwenken der Kugelstange 2 aus der gezeigten Betriebsstellung wieder in die in den Figuren 8, 8a, 9 und 10 gezeigte Verriegelungsstellung rücküberführt werden, ohne dass die Bewegungsfähigkeit der Kugelstange eingeschränkt wird. Die Verriegelung der Kugelstange in der Ruheposition erfolgt nämlich durch ein weiteres später erläutertes Verriegelungselement. Aus diesem Grunde ist es auch nicht erforderlich, dass der Hebel 7 bei der hier erläuterten Anhängekupplung 1 in deren Ruheposition für den Benutzer zugänglich ist, weil das Verriegelungselement zur Festlegung der Kugelstange 2 in der Ruheposition mittels eines anderen Betätigungselements betätigbar ist.

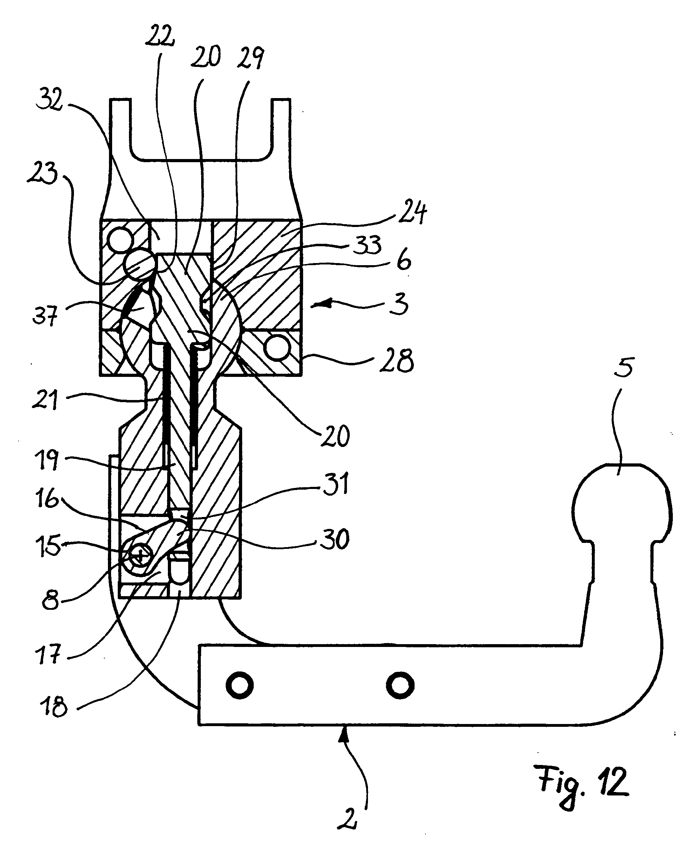

In den Figuren 11 bis 13 ist dargestellt, wie die Verriegelung der Kugelstange 2 in der Betriebsposition erfolgt. Figur 12 zeigt, dass mit einem mit dem Hebel 7 verbundenen und drehbar in der Kugelstange 2 gelagerten Wellenzapfen 15 ein Übertragungshebel 16 verdrehfest verbunden ist. Dieser Übertragungshebel 16 befindet sich im Inneren einer Tasche 17 in der Kugelstange 2. Innerhalb einer Bohrung 18 in der Kugelstange 2 ist verschiebbar ein Übertragungsglied 19 in Form einer Schubstange gelagert, die an ihrem dem Übertragungshebel 16 abgewandten Ende mit einem Verlagerungselement 20 einstückig verbunden ist. Das im Durchmesser gegenüber dem Übertragungsglied 19 vergrößerte Verlagerungselement 20 tritt in der in den Figuren 11 bis 13 gezeigten Betriebsstellung der Kugelstange 2 aus der Gelenkkugel 6 radial nach oben heraus und wird von einer Druckfeder 21, die sich in einem erweiterten Bereich der Bohrung 18 für das Übertragungsglied 19 abstützt, mit einer Fläche 22 in Form einer schiefen Ebene gegen einen zylindrischen Stützkörper 23, der fest mit einer oberen Lagerschale 24 des Lagerelements 3 verbunden ist, gepresst. Im unteren Bereich bewirkt das Verlagerungselement 20 mit seiner äußeren Mantelfläche, dass zwei Verriegelungskugeln 25, die in einer horizontalen Ebene (vgl. Fig. 11) um ca. 90° zueinander versetzt sind, radial nach außen gedrückt werden und daher über die Oberfläche 26 der Gelenkkugel 6 vorstehen. Mit ihren überstehenden Bereichen 27 greifen die Verriegelungskugeln 25 in angepasste Ausnehmungen ein, die sich zum Teil sowohl in der oberen Lagerschale 24 als auch zum Teil in der unteren Lagerschale 28 befinden. Im verriegelten Zustand erfolgt daher eine Übertragung der in die Kugelstange 2 im Anhängebetrieb eingeleiteten Kräfte und Momente sowohl über die beiden Verriegelungskugeln 25 in das Lagerelement 3 als auch über das Verlagerungselement 20 in das Stützelement 23 und damit in die obere Lagerschale 24 des Lagerelements 3. Um über die schiefe Ebene der Fläche 22 eine hinreichende Verschleißnachstellung infolge einer Axialbewegung des Verlagerungselements 20 zu ermöglichen, befindet sich auf der dem Stützelement 23 gegenüberliegenden Seite 29 des Verlagerungselements 20 hinreichend Spiel zu der zugeordneten Wandung der oberen Lagerschale 24 des Lagerelements 3.

Soll die Verriegelungseinrichtung von der gezeigten Verriegelungsstellung, in der sich die Kugelstange 2 in der Betriebsstellung befindet, in die Freigabestellung gebracht werden, so muss zunächst die Sperrklinke 10 des Hebels 7 nach vorne geschwenkt werden, um den Arretierstift 14 mit der Vertiefung 12 außer Eingriff zu bringen. Sodann kann der Hebel 7 durch entsprechenden Druck mit dem Handballen auf die Druckplatte 9 nach unten verschwenkt werden. Hierdurch wird der in Figur 12 sichtbare Übertragungshebel 16 im Uhrzeigersinn verschwenkt, weshalb durch den Eingriff des Vorderteils 30 des Übertragshebels 16 in eine Ausnehmung 31 in dem Übertragungsglied 19 dieses gegen die Kraft der Druckfeder 21 nach unten bewegt wird. Der obere Bereich des Verlagerungselements 20 wird somit aus dem in der oberen Lagerschale 24 befindlichen Teil einer Verriegelungsbohrung 32 zurückgezogen. Gleichzeitig kommt ein im Umfang eingeschnürter Mittelbereich des Verlagerungselements 20 mit einer umlaufenden und im Querschnitt trapezförmigen Nut 33 in den Bereich der beiden Verriegelungskugeln 25, so dass diese - aufgrund des nunmehr vorhandenen Platzes - weiter in das Innere der Gelenkkugel 6 eintreten können und sich daher aus den Ausnehmungen im Bereich der oberen Lagerschale 24 und der unteren Lagerschale 28 des Lagerelements 3 zurückziehen. Der zuvor formschlüssige Eingriff sowohl des Verlagerungselements 20 als auch der Verriegelungskugeln 25 in das Lagerelement 3 wird somit aufgehoben und die Gelenkkugel 6 ist zusammen mit der damit verbundenen Kugelstange 2 und auf der Kupplungskugel 5 um beliebige Achsen schwenkbar. Die Kupplungskugel 5 kann nun - auf beliebigem Wege, d.h. selbst bei komplizierten Einbausituationen der Anhängekupplung 1 und bei eingeschränkten Raumverhältnissen - so unter Teilen des Kraftfahrzeugs, insbesondere Stoßfängern, hindurchgeschwenkt werden, dass hinter einem Stoßfänger ein Ruhestellungsraum erreicht wird. In der Ruhestellung befindet sich die Kugelstange 2 vorzugsweise wiederum in einer mit ihrem Mittelteil ungefähr waagerechten Position, wobei sich die Kupplungskugel 5 in einer aufrechten Stellung befindet.

In der in den Figuren nicht dargestellten Ruheposition der Kugelstange 2 befindet sich ein in Figur 11 gezeigter und in der oberen Lagerschale 24 sowie einem daran befestigten topfförmigen Gehäuse 34 gelagerter Druckbolzen 35 mit seiner Spitze 36 in einer in der Gelenkkugel 6 befindlichen und in Figur 12 sichtbaren Verriegelungsbohrung 37. Auch in der Ruhestellung ist somit eine formschlüssige Festlegung der Gelenkkugel und damit der Kupplungsstange 2 gegeben.

Die Bewegung des Druckbolzens 35 ist über einen an dessen hinteren Ende 38 angreifenden Hebel 39 mit einer Schwenkbewegung einer Steckdosenhalterung 40 um deren Schwenkachse 41 gekoppelt. Die Schwenkachse 41 befindet sich an einem mit dem Lagerelement 3 fest verbundenen Ausleger 42. Dieser nimmt des weiteren auch die Drehachse 43 des vorstehend beschriebenen Hebels 39 auf, der an der dem Druckbolzen 35 abgewandten Ende in einem Gelenk 44 an die Steckdosenhalterung 40 angeschlossen ist.

In der in Figur 10 gezeigten Betriebsstellung der Kugelstange 2 befindet sich die Steckdosenhalterung 40 in der gleichfalls in dieser Figur gezeigten Anschlussstellung, in der sie mit ihrem Anschlussende 45 vertikal nach unten weist und leicht zugänglich ist. Wird die Kugelstange 2 in die Ruhestellung überführt und rastet dann der Druckbolzen 35 in die Gelenkkugel 6 ein, so verschiebt sich der Hebel 39 an seinem oberen Ende nach rechts, d.h. dreht sich um die Achse 43 im Uhrzeigersinn. Die Steckdosenhalterung 40 wird hierdurch um die Schwenkachse 41 gleichfalls im Uhrzeigersinn, d.h. in Richtung des Pfeils 46, nach oben geschwenkt, um eine Parkstellung zu erreichen, in der sie durch den Stoßfänger verdeckt ist.

In den Figuren 9, 9a und 10a lässt sich noch erkennen, dass mit dem Steckdosenhalter 40 ein Handgriff 47 verbunden ist, der in der nicht gezeigten Parkstellung der Steckdosenhalterung 40 gerade noch so unterhalb des Stoßfängers hervorschaut. An diesem Handgriff 47 kann somit die Steckdosenhalterung 40 ergriffen und entgegen dem Pfeil 46 in Figur 10 wieder nach unten in die Anschlussstellung gezogen werden, wodurch der Druckbolzen 35 aus der Gelenkkugel 6 herausgezogen wird. Hierdurch wird die Gelenkkugel 6, d.h. die Kugelstange 2, frei und schwingt - allein aufgrund der Wirkung der Gewichtskraft - nach unten. Vom Bediener muss sie sodann manuell nach vorne, d.h. auf den Bediener zu, verdreht werden, damit sie mit der vertikalen Fahrzeugmittelachse fluchtet. Die Steckdosenhalterung 40 dient somit als Betätigungselement, um die in der Ruhestellung gesicherte Kugelstange zu entriegeln, wobei infolge einer Fortsetzung der Entriegelungsbewegung die Steckdosenhalterung 40 in die Anschlussstellung überführt wird. In der Betriebsstellung rasten sodann die Verriegelungskugeln 25 selbsttätig in die Ausnehmungen in den Lagerelement 3 ein, da das Verlagerungselement 20 durch die Druckfeder 21 eine radial nach außen gerichtete Kraft auf die Verriegelungskugeln 25 ausüben.

## Patentansprüche

1. Anhängekupplung (1000, 1) für ein Kraftfahrzeug, mit einer Kupplungskugel (1150, 5) und einer damit verbundenen Kugelstange (1100, 2) und einem an einem Trägerteil des Kraftfahrzeugs festlegbaren Lagerelement, an dem die Kugelstange (1100, 2) an ihrem der Kupplungskugel (1150, 5) abgewandten Ende beweglich so gelagert ist, dass die Anhängekupplung (1000, 1) von einer Betriebsstellung (B) in eine Ruhestellung (R) und umgekehrt überführbar ist, wobei das Lagerelement ein Kugelgelenk ist, **dadurch gekennzeichnet, dass** das Kugelgelenk in der Betriebstellung der Anhängekupplung (1000, 1) alle zwischen dem Kraftfahrzeug und dem Anhänger auftretenden Betriebskräfte überträgt.

2. Anhängekupplung (1000, 1) nach Anspruch 1, **dadurch gekennzeichnet, dass** das Kugelgelenk von mindestens zwei Lagerschalen (1260, 1270, 24, 28) und einer dazwischen angeordneten Gelenkkugel (1200, 6) gebildet ist, die fest mit der Kugelstange (1100, 2) verbindbar ist.

3. Anhängekupplung (1000, 1) nach Anspruch 1 oder 2, **dadurch gekennzeichnet, dass** das Kugelgelenk sowohl in der Betriebsstellung (B) als auch in der Ruhestellung (R) der Anhängekupplung (1000, 1) mittels mindestens jeweils eines Verriegelungselements gegen Bewegung verriegelbar ist.

4. Anhängekupplung (1000, 1) nach Anspruch 3, **dadurch gekennzeichnet, dass** mindestens ein Verriegelungselement eine Verriegelungskugel (1300, 25) ist, die zumindest mit einer Bewegungskomponente in radiale Richtung der Gelenkkugel (1200, 6) beweglich gelagert und in einer Verriegelungsstellung (V) formschlüssig mit mindestens einer Vertiefung (1310, 1320) in der Gelenkkugel (1200, 6) in Eingriff bringbar ist.

5. Anhängekupplung (1000, 1) nach Anspruch 3 oder 4, **dadurch gekennzeichnet, dass** das Verriegelungselement mittels eines Federelements (1500, 21) elastisch in die Verriegelungsstellung (V) vorgespannt ist.

6. Anhängekupplung (1000, 1) nach mindestens einem der Ansprüche 3 bis 5, **dadurch gekennzeichnet, dass** das Verriegelungselement mittels eines Sicherungselements in der Verriegelungsstellung (V) sicherbar ist, wobei das Verriegelungselement nach Überführung des Sicherungselements von einer Sicherungsstellung (S) in eine Entsicherungsstellung (E) von der Verriegelungsstellung (V) in eine Freigabestellung (F) überführbar ist.

7. Anhängekupplung (1000) nach Anspruch 6, **dadurch gekennzeichnet, dass** das Sicherungselement (1400) eine schiefe Ebene aufweist.

8. Anhängekupplung (1000) nach mindestens einem der Ansprüche 1 bis 7, **dadurch gekennzeichnet, dass** die Gelenkkugel (1200) mindestens eine erste Vertiefung (1310) zur Verriegelung in der Betriebsstellung (B) und mindestens eine zweite Vertiefung (1320) zur Verriegelung in der Ruhestellung (R) aufweist und dass beide Vertiefungen (1310, 1320) jeweils mittels einer Nut (1330) in der Gelenkkugel (1200) miteinander verbunden sind, in der das jeweilige Verriegelungselement bei der Überführung der Anhängekupplung (1000) von der Ruhestellung (R) in die Betriebsstellung (B) und umgekehrt führbar ist.

9. Anhängekupplung nach einem der Ansprüche 1 bis 7, **dadurch gekennzeichnet, dass** die Verriegelungseinrichtung mindestens zwei Verriegelungskugeln (25) aufweist, die mittels eines Verlagerungselements (20), das innerhalb der Kugelstange (2) in axiale Richtung derselben verlagerbar ist, von einer Verriegelungsstellung, in der die Verriegelungskugeln (25) über die Oberfläche einer Gelenkkugel (6) vorstehen, in eine Freigabestellung bewegbar sind, in der die Verriegelungskugeln (25) unter die Oberfläche der Gelenkkugel (6) zurückgezogen sind.

10. Anhängekupplung nach einem der Ansprüche 1 bis 9, **gekennzeichnet durch** eine zweite Verriegelungseinrichtung, mit der die Kugelstange (2) in der Ruhestellung verriegelbar ist, wobei bei der Überführung der zweiten Verriegelungseinrichtung von der Verriegelungsstellung in die Freigabestellung eine Steckdosenhalterung (40) von einer Parkstellung in eine Anschlussstellung überführbar ist.
